# FASCICULE DE BREVET EUROPEEN

(11) **EP 2 718 944 B1**
(45) Date de publication et mention de la délivrance du brevet: **02.08.2017**
(21) Numéro de dépôt: 12725858.0
(22) Date de dépôt: 17.04.2012
(51) Int. Cl.: H01G 9/00, H01G 11/62, H01G 11/84

(54) **PROCEDE D'ASSEMBLAGE D'UN SUPERCONDENSATEUR HYBRIDE AU LITHIUM**
VERFAHREN ZUR MONTAGE VON EINES HYBRIDEN LITHIUMSUPERKONDENSATORS
METHOD FOR ASSEMBLING A HYBRID SUPERCAPACITOR BASED ON LITHIUM

(30) Priorité: 09.06.2011 FR 1155048
(43) Date de publication de la demande: 16.04.2014
(73) Titulaire: Blue Solutions, 29500 Ergué Gabéric (FR); Centre National de la Recherche Scientifique (C.N.R.S.), 75016 Paris (FR); Université François Rabelais, 37041 Tours (FR); Université d'Orléans, 45067 Orléans (FR)
(72) Inventeur: ANOUTI, Mérièm, F-37550 Saint Avertin (FR); LEMORDANT, Daniel, F-37210 Vouvray (FR); LOTA, Grzegorz, PL-60-158 Poznan (PL); DECAUX-MOUEZA, Céline, F-45000 Orleans (FR); RAYMUNDO-PINERO, Encarnacion, F-45100 Orleans (FR); BEGUIN, François, F-45160 Olivet (FR); AZAIS, Philippe, F-38120 Saint-Egreve (FR)
(74) Mandataire: Goulard, Sophie
(86) Numéro de dépôt international: PCT/FR2012/050837
(87) Numéro de publication internationale: WO 2012/172211

(56) Documents cités:
- WO-A1-2010/023185
- US-A1- 2009 176 164
- AZAIS ET AL: "Causes of supercapacitors ageing in organic electrolyte", JOURNAL OF POWER SOURCES, ELSEVIER SA, CH, vol. 171, no. 2, 8 septembre 2007 (2007-09-08), pages 1046-1053, XP022238122, ISSN: 0378-7753, DOI: 10.1016/J.JPOWSOUR.2007.07.001

## Description

La présente invention est relative à un procédé d'assemblage d'un système électrochimique hybride.

Il est connu, dans l'art antérieur, qu'un supercondensateur hybride, combinant les principes de stockage d'une batterie secondaire lithium-ion et d'un condensateur à double couche électrochimique (EDLC) possède une densité d'énergie plus élevée, généralement de l'ordre de 7 Wh.kg⁻¹, qu'un EDLC standard. Une cellule symétrique d'un EDLC standard est composée de deux électrodes capacitives identiques. La différence de potentiel d'une telle cellule non chargée est de 0 V, et elle augmente linéairement avec le temps au cours de la charge galvanostatique de la cellule. Lors de la charge, le potentiel de l'électrode positive augmente linéairement et le potentiel de l'électrode négative diminue linéairement. Au cours de la décharge, la tension de cellule diminue linéairement. Les EDLC symétriques industriels fonctionnant en milieu organique ont habituellement une tension nominale de l'ordre de 2,7 V. *A contrario,* l'électrode de type batterie au lithium est caractérisée par un potentiel quasiment constant au cours de la charge et de la décharge du système. Afin d'accroitre la tension de fonctionnement d'un supercondensateur, il est possible de remplacer l'électrode négative d'un EDLC par une électrode carbonée de type « batterie lithium ». Le document WO2010/023185 décrit un accumulateur rechargeable lithium ion comprenant une électrode négative à base de graphite, une électrode positive dont la matière active est le LiFePO4. L'électrolyte est un liquide ionique comprenant un anion et un cation et comprenant en outre un additif organique qui est le carbonate de vinyléthylène (VEC). Les problèmes principaux à résoudre dans ce type de supercondensateur hybride sont la formation de la couche de passivation et l'intercalation/insertion du lithium dans l'électrode négative. Dans un premier temps, la passivation de l'électrode négative permet la formation, sur cette électrode, d'une couche intermédiaire au cours d'un premier cycle de charge particulier. En présence de cette couche de passivation, les ions lithium sont désolvatés avant de s'intercaler/insérer dans l'électrode négative. La présence d'une couche de passivation bien formée permet d'éviter l'exfoliation de l'électrode négative en carbone au cours du cyclage du système. Le lithium est intercalé/inséré dans l'électrode négative jusqu'à atteindre une composition Li_{∼0.5}C₆. Ainsi, le potentiel de l'électrode négative reste relativement stable au cours des charges/décharges successives du supercondensateur hybride.

Dans l'état de la technique, différentes solutions sont habituellement retenues pour réaliser la couche de passivation et intercaler/insérer une quantité suffisante d'ions lithium dans l'électrode négative :
i) utiliser une source de lithium métallique pour éviter d'appauvrir l'électrolyte comme décrit par exemple dans la demande de brevet EP-A1-1 400 996 ;
ii) réaliser l'intercalation/insertion *ex-situ* du lithium dans le matériau actif d'électrode par exemple par broyage réactif ;
iii) saturer les fonctions de surface de l'électrode positive en carbone activé au moyen d'une solution électrolytique contenant des ions lithium, par exemple au moyen d'une solution aqueuse de LiOH comme proposé dans la demande de brevet JP 2008-177263. Le lithium contenu dans l'électrode positive permet ensuite de réaliser l'intercalation/insertion dans l'électrode négative sans appauvrissement de l'électrolyte.

L'inconvénient de l'utilisation de lithium métallique est qu'elle est particulièrement onéreuse et contraignante industriellement. De plus, en présence de solvant organique, le lithium métallique peut donner naissance à un emballement thermique, et donc poser des problèmes de sécurité.

La réalisation *ex-situ* d'un composé d'intercalation/insertion du lithium est également problématique : le matériau doit ensuite pouvoir être manipulé en vue de la fabrication du système de stockage d'énergie. Or, il est connu que ces matériaux sont particulièrement réactifs vis-à-vis de l'oxygène, de l'eau et de l'azote.

Ces trois solutions ne sont donc pas économiquement et/ou techniquement satisfaisantes.

On connaît également de la publication « High-energy density graphite/AC capacitor in organic electrolyte » (V. Khomenko, E. Raymundo-Pinero et F. Béguin), parue dans le Journal of Power Sources 177 (2008) 643-651, un procédé d'assemblage d'un supercondensateur hybride, c'est-à-dire d'un système électrochimique de stockage d'énergie comportant d'une part une électrode négative à base de carbone non poreux ou peu poreux (graphite, par exemple), ladite électrode étant une électrode classiquement utilisée comme anode dans les batteries au lithium, et d'autre part une électrode positive typiquement utilisée dans les condensateurs à double couche électrochimique, c'est-à-dire à base de carbone nanoporeux, dans laquelle l'intercalation/insertion du lithium à l'électrode négative est réalisée à l'aide du sel de lithium se trouvant dans l'électrolyte. Toutefois, les cellules utilisées sont des cellules de laboratoire offrant un réservoir d'électrolyte suffisamment important pour que lors de l'intercalation/insertion du lithium dans l'électrode négative, la conductivité et la composition de l'électrolyte restent inchangées. Dans le cas de systèmes plus compacts, le volume d'électrolyte est limité et l'intercalation/insertion du lithium dans l'électrode négative appauvrit l'électrolyte, ce qui engendre une baisse des performances du système.

Les inventeurs ont mis au point un supercondensateur hybride permettant de surmonter les inconvénients de l'état de la technique.

En particulier, les inconvénients des solutions proposées dans l'art antérieur sont surmontés, selon le procédé conforme à la présente invention, en utilisant comme dans la dernière publication citée le sel de lithium de l'électrolyte pour réaliser l'intercalation/insertion du lithium à l'électrode négative mais en accroissant fortement la concentration en ions lithium de l'électrolyte pour ensuite accepter un appauvrissement. L'appauvrissement en ions ayant un impact sur la conductivité, la quantité et la concentration d'électrolyte sont choisies pour permettre d'accepter cet appauvrissement tout en conservant une conductivité de l'électrolyte compatible avec un système puissant de stockage de l'énergie. Une partie des ions Li⁺ contenus dans l'électrolyte est utilisée pour former la couche de passivation et le composé d'intercalation/insertion Li_{∼0.5}C₆ à l'électrode négative

Cette invention n'a pas été envisagée auparavant par l'homme du métier, qui n'a jamais été incité à s'engager dans cette voie, notamment car il n'est pas évident d'obtenir une concentration suffisamment forte en ions Li⁺ avec un électrolyte classique (par exemple avec le composé ionique classique LiPF₆, les solvants d'électrolytes classiques sont saturés dans des conditions normales à environ 1,5 mol/L, ce qui est une concentration trop faible pour que l'appauvrissement de la solution soit acceptable en termes de conductivité et de quantité d'ions présents dans la solution.

La présente invention a donc pour objet un procédé d'élaboration d'un supercondensateur hybride, ledit procédé comprenant au moins une étape d'assemblage d'une électrode négative à base d'au moins un matériau carboné non poreux et d'une électrode positive à base d'au moins un matériau carboné poreux, lesdites électrodes étant séparées l'une de l'autre au moyen d'un séparateur imprégné d'un électrolyte liquide comprenant au moins un sel de lithium en solution dans au moins un solvant, puis au moins une première étape de charge, ledit procédé étant caractérisé en ce que :
a) la concentration en lithium ionique au sein de l'électrolyte liquide avant la première étape de charge est supérieure ou égale à 1,6 mol/L,
b) le sel de lithium de l'électrolyte liquide comprend au moins 50% en masse d'un sel choisi parmi le bis(trifluorométhanesulfonyl)imide de lithium (LiTFSI) et ses dérivés tels que le bis(fluorosulfonyl)imide de lithium (LiFSI) et le bis(pentafluorométhylsulfonyl)imide de lithium (LiBETI) ;
c) le solvant de l'électrolyte liquide comprend au moins 80% en volume d'un solvant choisi parmi les alkylcarbonates cycliques notamment choisis parmi l'éthylènecarbonate (EC) et le propylènecarbonate (PC), les alkylcarbonates acycliques notamment choisis parmi le diméthylcarbonate (DMC), le diéthylcarbonate (DEC) et le méthyl-isopropyl carbonate (MiPC), les lactones (telles que les beta- et gamma-lactones et les caprolactones), les esters comme l'acétate d'éthyle et l'éthylbutyrate (EB), les oxalanes comme le diméthoxyéthane (DME), et leurs mélanges ; étant entendu que ledit solvant comprend au moins 20 % en volume d'éthylènecarbonate ;
d) le matériau carboné poreux de l'électrode positive est choisi parmi les matériaux dans lesquels la dimension moyenne des pores est supérieure à 0,7 nm et ayant une surface spécifique supérieure à 700 m²/g, notamment variant de 700 à 2000 m²/g environ (méthode B.E.T) ;
e) le matériau carboné non poreux de l'électrode négative est choisi parmi les matériaux aptes à intercaler/insérer les ions lithium et ayant une surface spécifique inférieure ou égale à 150 m²/g ; notamment 80 m²/g ;
f) après l'étape d'assemblage, la charge dudit supercondensateur est réalisée en plusieurs étapes de charge successives jusqu'à une tension maximale (Uₘₐₓ) comprise entre 4 et 5 Volts et à une densité de courant variant de 10 mA/g à 400 mA/g ; chaque étape de charge étant séparée de l'étape de charge suivante par une étape intermédiaire d'autodécharge ou de décharge à un courant inférieur à 5 mA/g.

Dans un mode de réalisation préférentiel, les étapes de charge successives sont d'ailleurs séparées par des étapes d'autodécharge.

Selon l'invention, l'ensemble des étapes de charge successives et des étapes d'autodécharge ou de décharge à faible courant (également appelées étapes de relaxation) de l'étape f) est appelé cycle de formation. Selon le procédé conforme à la présente invention, le cycle de formation conduit à la formation de la couche de passivation et à l'intercalation/insertion des ions lithium dans l'électrode négative. Les étapes de charges successives conduisent à la consommation des ions lithium contenus dans l'électrolyte et à une diminution de sa concentration.

On choisit d'effectuer plusieurs étapes successives de décharge à très faible courant ou en autodécharge de manière à pouvoir atteindre un temps total de charge permettant l'intercalation/insertion du lithium dans l'électrode négative. Dans le cas particulier du graphite, l'intercalation du lithium conduit à la formation du composé d'intercalation Li_{∼0.5}C₆. Ainsi, lorsque le supercondensateur est en fonctionnement, le potentiel de l'électrode négative reste relativement stable.

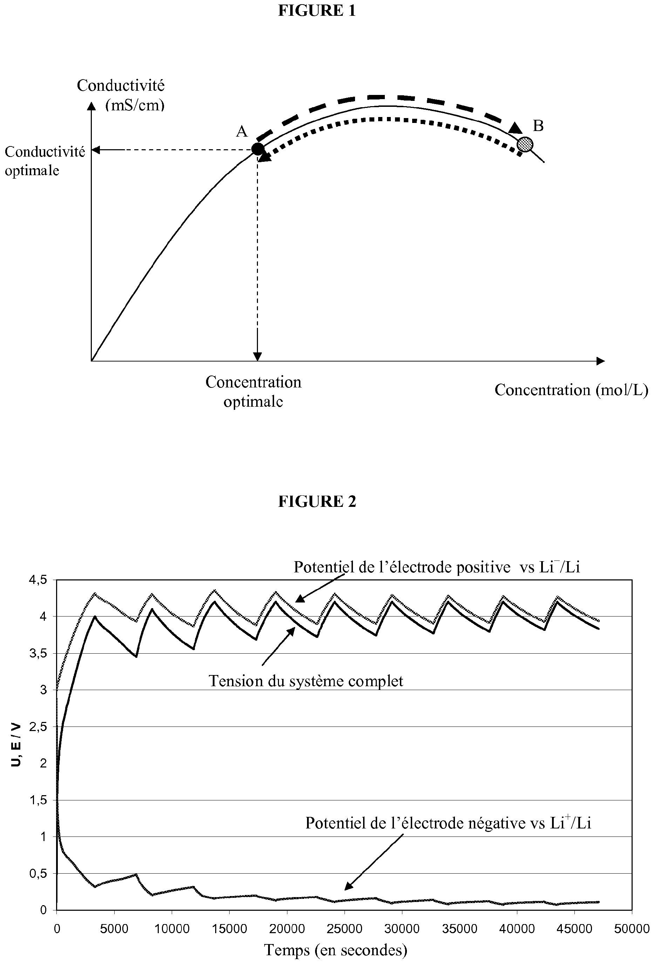

La figure 1 annexée représente l'évolution de la conductivité (mS/cm) en fonction de la concentration (mol/L) d'un électrolyte liquide renfermant du LiTFSI dans un mélange EC/DMC (1/1, v/v) au cours du processus de stockage d'énergie dans un supercondensateur conforme à l'invention. Cette figure montre que la concentration en ions lithium de l'électrolyte est choisie comme très élevée (point B) par rapport à la concentration optimale (point A). Les cycles de charge/relaxation de l'étape f) permettent la formation de la couche de passivation et d'intercaler/insérer les ions lithium dans l'électrode négative. Ces cycles entrainent une diminution de la concentration de l'électrolyte jusqu'au point A (optimal). On peut ainsi, grâce au procédé conforme à l'invention, obtenir un supercondensateur qui fonctionne correctement et dont les performances ne se dégradent pas, tout en supportant une différence de potentiel importante, notamment supérieure à 4 V. Ainsi, à la fin de l'étape de formation, la quantité d'ions lithium intercalée dans l'électrode négative est suffisante pour permettre que le potentiel du système reste relativement constant au cours de son fonctionnement. Le procédé conforme à l'invention permet d'accéder à des supercondensateurs ayant une densité d'énergie bien plus importante que les supercondensateurs à double couche électrochimique de l'état de la technique.

Selon une forme de réalisation préférée de l'invention, la concentration en lithium ionique au sein de l'électrolyte liquide avant la première étape de charge est supérieure ou égale à 2,0 mol/L environ.

Egalement selon une forme de réalisation préférée de l'invention, l'électrolyte liquide est choisi parmi les couples sel de lithium/solvant(s) suivants :
i) LiTFSI / mélange EC/DMC (1/1 ; v/v) ;
ii) LiFSI / mélange EC/DMC (1/1 ; v/v);
iii) LiBETI / mélange EC/DMC (1/1 ; v/v);
iv) LiTFSI / mélange EC/EB/DMC (1/1/3 ; v/v/v),
v) LiTFSI / mélange EC/MiPC/DMC (2/1/3/ ; v/v/v) ;
vi) LITFSI/ mélange EC/DME (1/2 ; v/v).

De façon classique, le composé ionique lithié (composé qui dans un solvant se dissocie pour former des ions Li⁺), et le solvant sont choisis de sorte que l'électrolyte ait un produit de Walden le plus élevé possible à la température de mise en présence (notamment 20°C à 25°C). Le produit de Walden Λη est le produit de la viscosité (η en mPa.s) par la conductivité molaire du composé (Λ=σ/C en mS.cm⁻¹(mol.L⁻¹)⁻¹). Le tableau 1 ci-après présente le produit de Walden pour différents électrolytes liquides à base de LiTFSI utilisables selon le procédé de l'invention, comparativement à celui d'un électrolyte liquide à base de LiPF₆ seul dans un mélange de solvants déjà connu :

**TABLEAU 1**

| **Sel : LiTFSI** | **Conductivité à 20°C** | **Viscosité à 25°C** | Λη |
|---|---|---|---|
| EC/DMC | 9,3 | 3,52 | 32,7 |
| EC/EB/3DMC | 9,08 | 3,58 | 32,5 |
| 2EC/MiPC/3DMC | 9,83 | 3,46 | 34,0 |
| EC/2DME | 18,1 | 3,0 | 54,3 |
| EC/DEC | 6,8 | 3,25 | 22,1 |
| EC/PC/3DMC | 8 | 3,56 | 28,5 |
| **Sel : LiPF₆** | **Conductivité à 20°C** | **Viscosité à 25°C** | Λη |
| EC/DMC | 11,20 | 3,50 | 39,2 |
| EC/PC/3DMC | 10,58 | 3,56 | 37,6 |

N.B. : Dans ce tableau, les proportions des solvants utilisés en mélange sont données en volume, par exemple EC/DMC signifie que le solvant est constitué d'un mélange à volumes égaux d'EC et de DMC.

Comme on le voit dans ce tableau, les valeurs des couples choisis sont de même ordre de grandeur que les électrolytes usuels, ce qui confirme leur intérêt pour l'application.

En plus des sels de lithium mentionnés ci-dessus au point b) lors de la présentation de l'invention (sels de lithium principaux), l'électrolyte liquide utilisable selon le procédé conforme à l'invention peut en outre renfermer du LiPF₆ à titre de sel de lithium additionnel.

Lorsque l'électrolyte liquide renferme du LiPF₆ à titre de sel de lithium additionnel, celui-ci est présent dans l'électrolyte en une quantité massique inférieure à celle des sels de lithium définis ci-dessus au point b), cette quantité représentant au maximum le quart de la quantité molaire de sels de lithium mentionnés au point b), et de préférence de 1 à 10 % en masse par rapport par rapport à la masse de sels de lithium mentionnés au point b) ci-dessus. La présence de ce sel de lithium additionnel est avantageuse dans la mesure où il permet de passiver le collecteur en aluminium de l'électrode positive.

Le matériau carboné poreux de l'électrode positive est de préférence choisi parmi le carbone dérivé de carbure (CDC), les nanotubes de carbone poreux, les noirs de carbones poreux, les fibres de carbone poreuses, les oignons de carbone, les carbones issus de coke (dont la porosité est accrue par charge). Selon une forme de réalisation préférée de l'invention, la surface spécifique du matériau carboné poreux de l'électrode positive varie de 1200 à 1800 m²/g environ (méthode B.E.T).

La densité du matériau carboné poreux de l'électrode positive varie de préférence de 0,5 à 0,8 g/cm³.

Le taux d'oxygène dans le matériau carboné poreux de l'électrode positive est de préférence inférieur à 2 % en masse.

L'électrode positive a de préférence une épaisseur variant de 70 à 120 µm environ.

Le matériau carboné non poreux de l'électrode négative est choisi parmi les matériaux permettant l'intercalation/insertion du lithium. Le matériau carboné non poreux de l'électrode négative est de préférence choisi parmi le graphite, les carbones basse température (durs ou tendres), le noir de carbone, les nanotubes de carbone non poreux et les fibres de carbone non poreuses.

La densité du matériau carboné non poreux de l'électrode négative varie de préférence de 1,0 à 1,9 g/cm³. La surface spécifique (méthode B.E.T) du matériau carboné non poreux de l'électrode négative est de préférence inférieure à 50 m²/g environ.

L'électrode négative a de préférence une épaisseur variant de 40 à 70 µm environ.

Selon une forme de réalisation préférée de l'invention, le rapport entre la masse de l'électrode positive et celle de l'électrode négative est supérieur ou égal à 1. Ce rapport M_{E+}/M_{E-} varie de préférence de 1 à 5 inclusivement. Selon une forme de réalisation tout particulièrement préférée de l'invention le rapport M_{E+}/M_{E-} est égal à 1 Ce rapport est de préférence optimisé de façon à avoir le même nombre de charge au niveau des électrodes positives et négatives.

Outre le matériau carboné (poreux de l'électrode positive et non poreux de l'électrode négative), les électrodes positive et/ou négative comprennent généralement au moins un liant et éventuellement au moins un agent conférant une conductivité électronique.

Le liant peut être choisi parmi les liants organiques classiquement connus de l'homme de l'art et électrochimiquement stables jusqu'à un potentiel de 5 V vs Li. Parmi de tels liants, on peut notamment citer :
- les homopolymères et les copolymères de fluorure de vinylidène, tels que le poly(fluorure de vinylidène) (PVDF),
- les copolymères d'éthylène, de propylène et d'un diène,
- les homopolymères et les copolymères de tétrafluoroéthylène,
- les homopolymères et les copolymères de N-vinylpyrrolidone,
- les homopolymères et les copolymères d'acrylonitrile
- les homopolymères et les copolymères de méthacrylonitrile,
- etc.

Lorsqu'il est présent, le liant représente de préférence de 5 à 15% en masse environ par rapport à la masse totale de l'électrode.

L'agent conférant des propriétés de conduction électronique peut être du carbone, de préférence choisi parmi les noirs de carbone tels que le noir d'acétylène, les noirs de carbone à haute surface spécifique tels que les produits vendus sous la dénomination Ketjenblack® EC-600JD par la société AKZO NOBEL, des nanotubes de carbone, du graphite, ou des mélanges de ces matériaux. Il peut également s'agir d'une dispersion aqueuse de noir de carbone ou de graphite tel que le produit vendu sous la dénomination commerciale Electrodag® EB-012 par la société ACHESON. D'autres produits peuvent également être utilisés.

Selon l'invention, le matériau conférant des propriétés de conduction électronique représente de préférence de 1 à 10 % en masse environ par rapport à la masse totale de l'électrode.

Selon l'invention, le matériau composite constituant les électrodes est de préférence déposé sur un collecteur de courant, tel qu'un collecteur de courant en cuivre pour l'électrode négative et en aluminium pour l'électrode positive.

La température de mise en oeuvre du procédé conforme à l'invention peut être la température ambiante mais peut également être une température plus élevée que la température ambiante (par exemple comprise entre 25°C et 70°C) pour augmenter la solubilité du composé lithié dans le solvant utilisé. Selon une variante, le procédé conforme à l'invention est mis en oeuvre à une température supérieure ou égale à 35°C. Ainsi, les cycles de charge/relaxation pour former la couche de passivation et intercaler/insérer le lithium dans l'électrode négative sont réalisés à une température supérieure ou égale à 35°C. Cela permet d'accélérer la formation de la couche de passivation.

L'électrolyte liquide utilisable selon le procédé conforme à l'invention peut en outre renfermer un ou plusieurs co-solvants destinés à augmenter la conductivité ionique et étendre la température d'utilisation, de tels co-solvants étant choisis parmi des esters d'alkyle tels que l'acétate d'éthyle, le propanoate de méthyle, le propanoate d'éthyle, le butyrate d'éthyle, le butyrate de méthyle, etc ..., et leurs mélanges. Lorsqu'ils sont utilisés, le ou les co-solvants représentent de préférence de 20 à 80 % en volume par rapport à la masse totale de l'électrolyte liquide. Ces co-solvants permettent notamment d'améliorer les performances à froid du supercondensateur.

Selon une forme de réalisation préférée de l'invention, la durée des étapes de relaxation entre chacune des étapes de charges successives de l'étape f) varie de 1 à 3 heures environ.

Selon une forme de réalisation particulièrement préférée de l'invention, l'étape f) comprend les sous-étapes suivantes :
1) une sous-étape 1 de charge à une densité de courant comprise entre 10 et 400 mA/g jusqu'à une tension Uₘₐₓ₁ comprise entre 4,0 V et 5 V inclusivement, suivie d'une période de relaxation d'une durée d' 1 heure minimum. ;
2) une sous-étape 2 de charge à une densité de courant comprise entre 10 et 400 mA/g jusqu'à une tension Uₘₐₓ₂ > Uₘₐₓ₁ et ≤ 5 V, suivie d'une période de relaxation d'une durée d' 1 heure minimum ;
3) une sous-étape 3 de charge à une densité de courant comprise entre 10 et 400 mA/g jusqu'à une tension Uₘₐₓ₃ > Uₘₐₓ₂ et ≤ 5 V, suivie d'une période de relaxation d'une durée d' 1 heure minimum ;
4) une sous-étape 4 de charge à une densité de courant comprise entre 10 et 400 mA/g jusqu'à une tension Uₘₐₓ₄ > Uₘₐₓ₃ et ≤ 5 V, suivie d'une période de relaxation d'une durée d' 1 heure minimum ;
5) une sous-étape 5 de charge à une densité de courant comprise entre 10 et 400 mA/g jusqu'à une tension Uₘₐₓ₅ > Uₘₐₓ₄ et ≤ 5 V, suivie d'une période de relaxation d'une durée d' 1 heure minimum.

La sous-étape 5) du cycle de formation peut être répétée jusqu'à obtention d'un potentiel stable proche de 0 V à l'électrode négative dans le cas d'une cellule à 3-électrodes où le potentiel de chaque électrode du système peut être suivi. Dans le cas d'une cellule à 2-électrodes, le cycle de formation est arrêté soit en fonction des résultats obtenus en cellule 3-électrodes, soit lorsque la tension en fin de période de relaxation est la même d'une sous-étape à l'autre, indiquant une stabilisation du potentiel de l'électrode négative.

Dans le cas particulier du graphite, la sous-étape 5) peut être répétée jusqu'à obtention d'un potentiel stable de l'électrode négative proche de 0,1V vs. Li⁺/Li. La réalisation de l'étape f) du procédé conforme à l'invention permet alors de former le composé d'intercalation Li_{∼0.5}C₆ à l'électrode négative.

Les cycles de charge/relaxation peuvent également comprendre plus ou moins d'étapes que ce qui a été décrit ici, les tensions de charge pouvant également varier.

La présente invention est illustrée par les exemples suivants, auxquels elle n'est cependant pas limitée.

On notera que le produit issu du procédé selon l'invention comprend des électrodes telles que décrites aux points d) et e) de la revendication 1, un électrolyte comprenant un sel de lithium et un solvant tels que décrits aux points b) et c) de la revendication 1. En revanche, la concentration en lithium dans l'électrolyte du produit final peut être inférieure au seuil défini dans la revendication.

On notera également que l'électrode négative du produit final est une électrode en graphite et que le composé d'intercalation formé est de préférence proche du stade II d'intercalation soit Li_{∼0.5}C₆.

### Exemple 1

Un supercondensateur hybride a été réalisé selon le procédé suivant, conformément à l'invention :
- Electrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit (après séchage et calandrage) : 100 µm.
- Electrode négative : 91 % en masse de graphite vendu sous la dénomination commerciale SLP30 par la société TIMCAL, 8 % en masse de PVDF, 1 % en masse de noir de carbone. Ce matériau composite d'électrode a été enduit sur collecteur en cuivre. Epaisseur de l'enduit : 50 µm.
- Electrolyte utilisé: LiTFSI 2 mol/L dans un mélange EC/DMC 1:1 (v/v)
- Une électrode de référence Li⁺/Li a été ajoutée pour suivre l'évolution des potentiels des électrodes positive et négative. On notera que cette électrode n'a été intégrée à l'assemblage que dans le but d'effectuer des mesures et ne fait pas partie intégrante de l'invention.

Après assemblage, le système a été chargé selon le cycle de formation conforme à l'invention comprenant des étapes de charge par chronopotentiométrie suivies de période de relaxation de 2 heures comme décrit dans la figure 2 annexée sur laquelle la tension et les potentiels d'électrodes (en volt) sont fonction du temps (en sec). Il s'agit de cycles de charge (à 37,2mA/g)/autodécharge. La tension du système à la fin des cycles était de 4,2V.

Les caractéristiques de l'électrode négative ont été choisies de sorte que son potentiel était de l'ordre de 0,1V vs Li⁺/Li après la fin des cycles de charge/autodécharge, correspondant approximativement au stade II d'intercalation du lithium dans le graphite.

Ensuite, des cycles galvanostatiques à ±0,65A/g ont été réalisés sur le système entre Uₘₐₓ=4,2V et Uₘᵢₙ=1,5V à température ambiante. Un cycle galvanostatique correspond à une charge et une décharge du système.

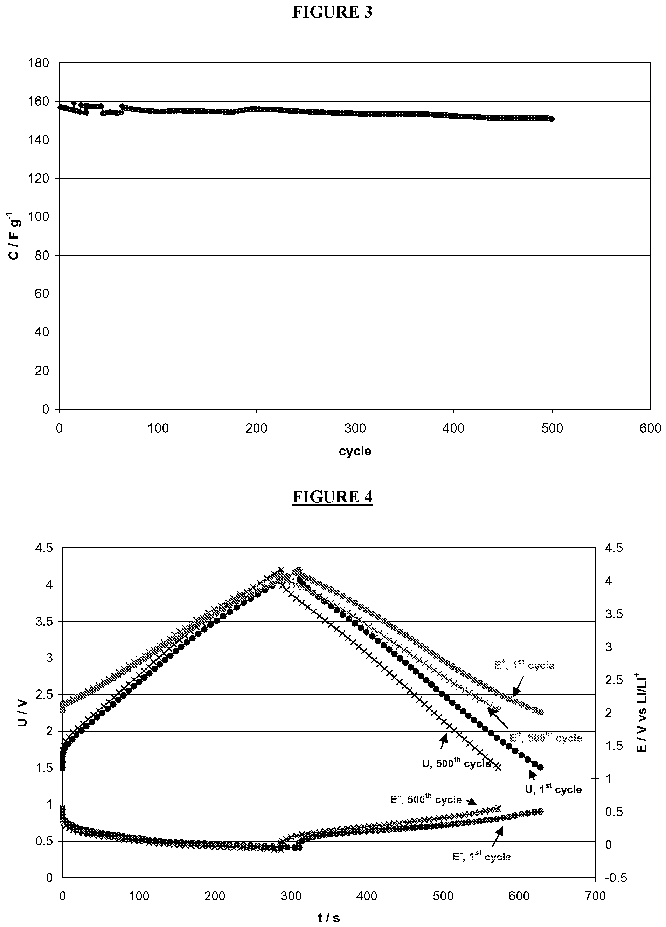

Le résultat de ce cyclage est montré à la figure 3 annexée sur laquelle la capacité gravimétrique (en F.g⁻¹) est exprimée en fonction du nombre de cycles. La figure 4 annexée montre l'évolution des potentiels (en V) des deux électrodes et de la tension (en V) en fonction du temps (en sec.) au cours du premier cycle et au bout de 500 cycles.

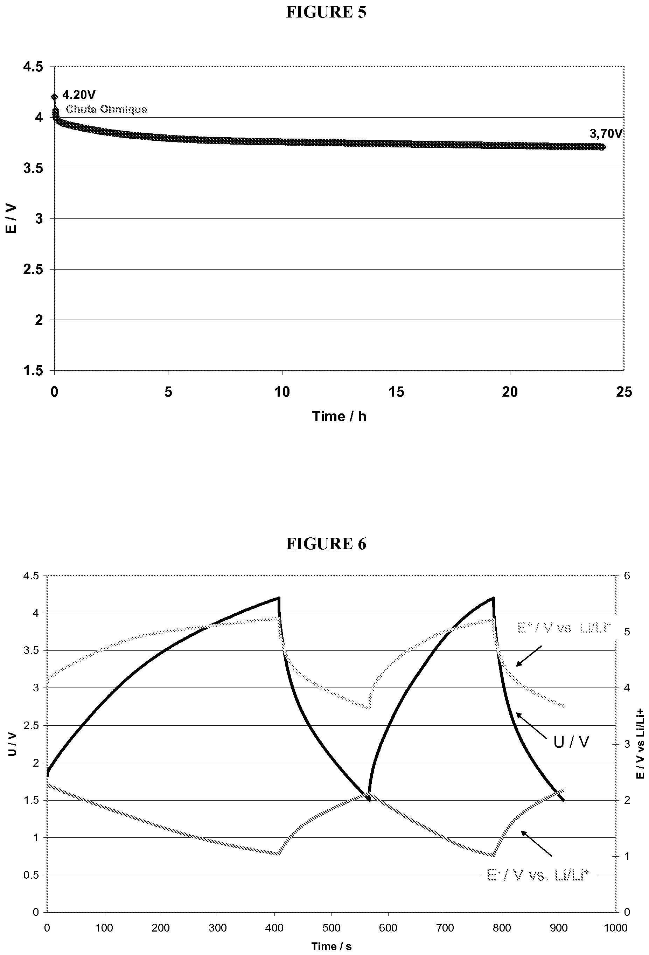

L'autodécharge du système à deux électrodes a également été mesurée après 500 cycles. La tension est alors maintenue à 4,2 V pendant 30 min et ensuite l'autodécharge est enregistrée (figure 5 annexée sur laquelle la tension (en V) est fonction du temps (en heures)).

Les performances après les cycles de formation du système sont présentées dans le tableau 2 ci-après.

### Exemple comparatif 1 :

Un supercondensateur symétrique non conforme à l'invention a été réalisé selon le mode suivant :
- Electrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.
- Electrode négative : elle est identique à l'électrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.

On notera que les deux électrodes sont ici identiques à l'électrode positive de l'exemple 1.
- Electrolyte utilisé: LiTFSI 2 mol/L dans un mélange EC/DMC 1:1 (v/v)
- Une électrode de référence Li⁺/Li a été ajoutée pour suivre l'évolution des potentiels des électrodes positive et négative.

Après assemblage, des cycles galvanostatiques ont été réalisés sur le système à ±0,65A/g entre Uₘₐₓ=4,2V et Uₘᵢₙ=1,5V à température ambiante. Le cyclage galvanostatique (0,65A/g) n'a pas été réalisable en raison de la forte dégradation de l'électrolyte à l'électrode positive. Le potentiel de l'électrode positive atteint plus de 5 V vs Li⁺/Li comme montré à la figure 6 annexée sur laquelle la tension et les potentiels d'électrode (en volts) sont fonction du temps (en sec..).

Les performances du système sont présentées dans le tableau 2 ci-après.

### Exemple comparatif 2 :

Un supercondensateur symétrique non conforme à l'invention a été réalisé selon le mode suivant, conforme à celui décrit dans l'exemple comparatif 1 :
- Electrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.
- Electrode négative : identique à l'électrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.
- Electrolyte utilisé: LiTFSI 2 mol/L dans un mélange EC/DMC 1:1 (v/v).
- Une électrode de référence Li⁺/Li a été ajoutée pour suivre l'évolution des potentiels des électrodes positive et négative.

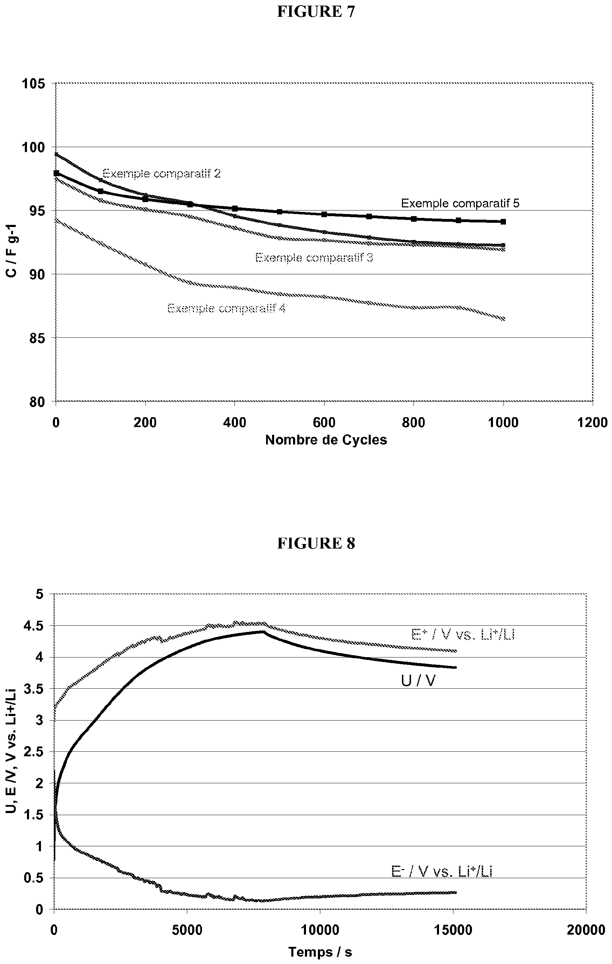

Après assemblage, des cycles galvanostatiques ont été réalisés à ±0,65A/g sur le système entre Uₘₐₓ=2,5V et Uₘᵢₙ=0V à température ambiante. Les résultats sont présentés à la figure 7 annexée sur laquelle la capacité gravimétrique (en F/g) est portée en fonction du nombre de cycles (courbe la plus haute).

Les performances du système sont présentées dans le tableau 2 ci-après.

### Exemple comparatif 3 :

Dans cet exemple, un supercondensateur symétrique non conforme à l'invention et identique à celui de l'exemple comparatif 2 a été préparé, mais l'électrolyte a été remplacé par 1,6 mol/L de (LiTFSI + 1% molaire de LiPF₆) dans un mélange EC/DMC 1:1 (v/v). La tension a été limitée à 2,5 V également. Le cyclage galvanostatique à ±0,65A/g a été réalisé sur le système à température ambiante. Les résultats sont présentés à la figure 7 (courbe intermédiaire).

Les performances du système sont présentées dans le tableau 2 ci-après.

### Exemple comparatif 4 :

Dans cet exemple, un supercondensateur symétrique non conforme à l'invention et identique à celui de l'exemple comparatif 2 a été préparé mais l'électrolyte a été remplacé par 2 mol/L de (LiTFSI + 1% molaire de LiPF₆) dans un mélange EC/DMC 1:1. La tension a également été limitée à 2,5 V. Le cyclage galvanostatique à ±0,65A/g a été réalisé sur le système à température ambiante. Les résultats sont présentés à la figure 7 annexée (courbe la plus basse).

Les performances du système sont présentées dans le tableau 2 ci-après.

### Exemple comparatif 5 :

Dans cet exemple, un supercondensateur symétrique non conforme à l'invention et identique à celui de l'exemple comparatif 2 a été préparé, mais l'électrolyte a été remplacé par TEABF₄ 1 mol/L dans l'acétonitrile.

Après assemblage, le système a été chargé en limitant la tension à 2,5 volts. Le cyclage galvanostatique à ±0,65A/g a été réalisé sur le système à température ambiante.

Les performances du système sont présentées dans le tableau 2 ci-après.

### Exemple comparatif 6 :

Un supercondensateur hybride non conforme à l'invention a été réalisé selon le mode suivant :
- Electrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.
- Electrode négative : 91 % en masse de graphite vendu sous la dénomination commerciale SLP30 par la société TIMCAL, 8 % en masse de PVDF, 1 % en masse de noir de carbone. Ce matériau composite d'électrode a été enduit sur collecteur en cuivre. Epaisseur de l'enduit : 50 µm

On notera que les électrodes positive et négative sont identiques à celles de l'exemple 1.
- Electrolyte utilisé: LiTFSI 2 mol/L + 1% LiPF₆ dans un mélange EC/DMC 1:1 (v/v)
- Une électrode de référence Li⁺/Li a été ajoutée pour suivre l'évolution des potentiels des électrodes positive et négative.

Après assemblage, le cycle de formation, non conforme à l'invention, a consisté en une charge directe jusqu'à 4,4 V suivie d'une période d'autodécharge de 2 heures. L'évolution de la tension et des potentiels d'électrodes (en V) en fonction du temps (en sec.) au cours du cycle de formation est montrée sur la figure 8 annexée.

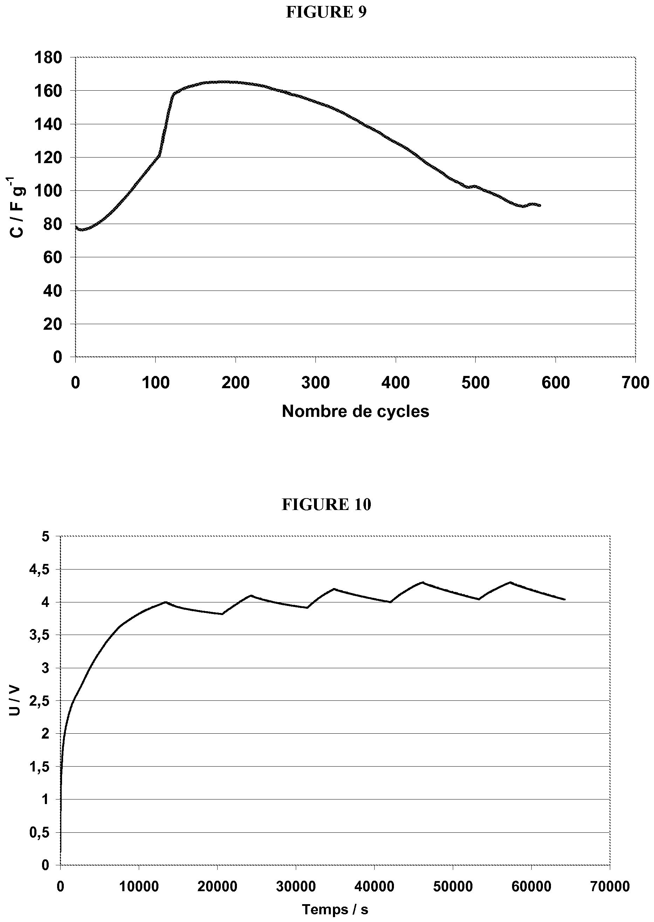

Des cycles galvanostatiques ont été réalisés sur le système à ±0,65A/g entre Uₘₐₓ=4,4V et Uₘᵢₙ=1,5V à température ambiante. Le résultat du cyclage galvanostatique est montré sur la figure 9 annexée sur laquelle la capacité gravimétrique (en F.g⁻¹) est exprimée en fonction du nombre de cycles.

Les performances après le cycle de formation du système sont présentées dans le tableau 2 ci-après.

### Exemple 2 conforme à l'invention

Un supercondensateur hybride conforme à l'invention a été réalisé selon le mode suivant:
- Electrode positive : 80 % en masse de carbone activé poreux (Surface spécifique (S_{BET}) = 1670 m²/g) ; 10 % en masse de PVDF, 10 % en masse de noir de carbone. Ce matériau composite d'électrode a été enduit sur un collecteur de courant en aluminium ayant une épaisseur de 30 µm. Epaisseur de l'enduit : 100 µm.
- Electrode négative : 91 % en masse de graphite vendu sous la dénomination commerciale SLP30 par la société TIMCAL, 8 % en masse de PVDF, 1 % en masse de noir de carbone. Ce matériau composite d'électrode a été enduit sur collecteur en cuivre. Epaisseur de l'enduit : 50 µm.
   On notera que les électrodes positive et négative sont identiques à celles de l'exemple 1 et que contrairement à l'exemple 1 aucune électrode de référence en lithium métallique n'est présente dans le système.
- Electrolyte utilisé: 2 mol/L LiTFSI + 1% molaire LiPF₆ dans un mélange EC/DMC 1:1 (v/v)

Après assemblage, le système a été chargé selon les cycles de formation conformes à l'invention comprenant des étapes de charge par chronopotentiométrie suivies de périodes de relaxation de 2 heures, comme décrit dans la figure 2 annexée sur laquelle la tension (en volt) est fonction du temps (en sec). Il s'agit de cycles de charge (à 37,2mA/g)/autodécharge. La tension maximale du système était de 4,4V.

La figure 10 annexée montre l'évolution de la tension (en V) en fonction du temps (en sec.) au cours des cycles de formation.

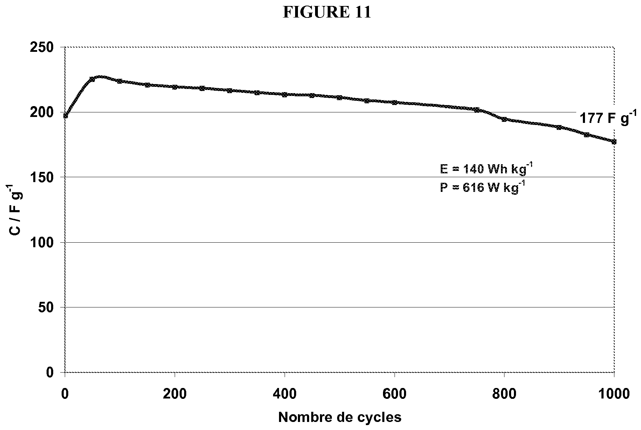

Des cycles galvanostatiques ont été réalisés sur le système à ±0,65A/g entre Uₘₐₓ=4,4V et Uₘᵢₙ=1,5V à température ambiante. Le résultat de ce cyclage est montré à la figure 11 annexée sur laquelle la capacité gravimétrique (en F.g⁻¹) est exprimée en fonction du nombre de cycles.

Les performances après les cycles de formation du système sont présentées dans le tableau 2 ci-après.

Les performances des différents systèmes préparés dans les exemples ci-dessus sont présentées dans le tableau 2 suivant :

**TABLEAU 2**

| **Exemple** | **Système** | **Electro-lyte** | **Capacité gravimétrique (F/g) pour 1 électrode** | **Plage de fonctionnement Umin-Umax (V)** | **Densité d'énergie max (Wh/kg)** | **E- /E+ (V vs Li) après charge à Uₘₐₓ** |
|---|---|---|---|---|---|---|
| Ex. 1 | Hybride (carbone activé / graphite) | 2M LiTFSI EC/DMC | 156 (stable) | 1,5-4.2 | 83 | 0,105/ 4,305 |
| Ex. comparatif 1 | Symétrique (carbone activé/ carbone activé) | 2M LiTFSI EC/DMC | Pas calculé - ne fonctionne pas | 0-4,2V | Pas calculé - ne fonctionne pas | 1,0/ 5,2 |
| Ex. comparatif 2 | Symétrique (carbone activé/ carbone activé) | 2M LiTFSI EC/DMC | En diminution : 99 puis 95 au bout de 500 cycles | 0-2.5-V | 18 | 1,88/4,31- |
| Ex. comparatif 3 | Symétrique (carbone activé/ carbone activé) | 1,6M LiTFSI + 1%M LiPF₆ EC/DMC | En diminution : 98 puis 94 au bout de 500 cycles | 0-2.5V | 18 | - |
| Ex. comparatif 4 | Symétrique (carbone activé/ carbone activé) | 2M LiTFSI +1%M LiPF₆ EC/DMC | En diminution : 95 puis 89 au bout de 500 cycles | 0-2.5V | 17 | |
| Ex. comparatif 5 | Symétrique (carbone activé/ carbone activé) | 1M TEABF₄ ACN | 98 puis 95 au bout de 500 cycles | 0-2.5V | 21 | |
| Ex. comparatif 6 | Hybride (carbone activé / graphite) | 2M LiTFSI +1% LiPF₆ EC/DMC | 80-160 : instable. Après 500 cycles, environ 95 | 1.5-4,4 | Non mesurable de façon fiable (instabilité capacité) | |
| Ex. 2 | Hybride (carbone activé / graphite) | 2M LiTFSI +1% LiPF₆ EC/DMC | 197 puis augmente après qq cycles. Après 500 cycles, 210 | 1,5-4,2 | 140 | - |

L'ensemble de ces résultats montrent tout d'abord que les supercondensateurs selon l'invention permettent d'obtenir une capacité gravimétrique plus élevée que les autres (en comparant les exemples 1 et 2 avec les exemples comparatifs 1 à 5). De plus, ils peuvent fonctionner à une tension plus élevée (4,2 V). Ces deux facteurs permettent d'augmenter considérablement (d'un facteur 5 à 10) la densité d'énergie de ces supercondensateurs. Ces derniers permettent donc, à encombrement égal, de délivrer une plus grande puissance et sont de ce fait particulièrement avantageux.

En outre, ces supercondensateurs hybrides vieillissent bien puisque leur capacité gravimétrique (et donc leur densité d'énergie) restent relativement constante pendant au moins 500 cycles, ce qui n'est pas le cas pour les supercondensateurs symétriques dans le même électrolyte.

La capacité initiale est plus élevée dans l'exemple 2 que dans l'exemple 1, car la tension maximale est également plus élevée. En revanche, on note que la diminution de capacité est plus importante dans le cas de l'exemple 2 au cours du cyclage, à cause probablement de la corrosion de l'aluminium, ceci malgré un faible ajout de LiPF₆ dans l'électrolyte.

On remarque en outre que le cycle de formation décrit à l'étape f) permet d'assurer la stabilité du supercondensateur dans le temps (au contraire d'autres procédés de charge, comme on le remarque au vu de l'exemple comparatif 6) et d'obtenir à la fois un supercondensateur ayant une densité d'énergie élevée et également fiable.

De plus, le choix des électrolytes permettant un bon fonctionnement des supercondensateur hybrides n'est pas un choix évident pour l'homme du métier. En effet, on voit bien que ces électrolytes ne sont pas optimaux pour des supercondensateurs symétriques. Les capacités gravimétriques et les densités d'énergie des exemples comparatifs 2 à 4 sont inférieures à celles obtenues dans un électrolyte classique type 1 mol/L TEABF₄ dans l'acétonitrile (exemple comparatif 5).

Ainsi, l'invention permet d'obtenir un supercondensateur hybride qui permet d'augmenter la tension de travail et donc de délivrer une plus grande densité d'énergie que les supercondensateurs symétriques de l'état de l'art.

## Revendications

1. Procédé d'élaboration d'un supercondensateur hybride, ledit procédé comprenant au moins une étape d'assemblage d'une électrode négative à base d'au moins un matériau carboné non poreux et d'une électrode positive à base d'au moins un matériau carboné poreux, lesdites électrodes étant séparées l'une de l'autre au moyen d'un séparateur imprégné d'un électrolyte liquide comprenant au moins un sel de lithium en solution dans au moins un solvant, puis au moins une première étape de charge, ledit procédé étant **caractérisé en ce que** :
a) la concentration en lithium ionique au sein de l'électrolyte liquide avant la première étape de charge est supérieure ou égale à 1,6 mol/L,
b) le sel de lithium de l'électrolyte liquide comprend au moins 50% en masse d'un sel de lithium choisi parmi le bis(trifluorométhanesulfonyl)imide de lithium (LiTFSI) et ses dérivés tels que le bis(fluorosulfonyl)imide de lithium (LiFSI) et le bis(pentafluorométhylsulfonyl)imide de lithium (LiBETI) ;
c) le solvant de l'électrolyte liquide comprend au moins 80% en volume d'un solvant choisi parmi les alkylcarbonates cycliques choisis parmi l'éthylènecarbonate (EC) et le propylènecarbonate (PC), les alkylcarbonates acycliques choisis parmi le diméthylcarbonate (DMC), le diéthylcarbonate (DEC) et le méthyl-isopropyl carbonate (MiPC), les lactones, les esters, les oxalanes, et leurs mélanges ; étant entendu que ledit solvant comprend au moins 20 % en volume d'éthylènecarbonate ;
d) le matériau carboné poreux de l'électrode positive est choisi parmi les matériaux dans lesquels la dimension moyenne des pores est supérieure à 0,7 nm et ayant une surface spécifique supérieure à 700 m²/g environ;
e) le matériau carboné non poreux de l'électrode négative est choisi parmi les matériaux aptes à insérer les ions lithium et ayant une surface spécifique inférieure ou égale à 150 m²/g ;
f) après l'étape d'assemblage, la charge du dit supercondensateur est réalisée en plusieurs étapes de charge successives jusqu'à une tension maximale (Uₘₐₓ) comprise entre 4 et 5 Volts et à une densité de courant variant de 10 mA/g à 400 mA/g ; chaque étape de charge étant séparée de l'étape de charge suivante par une étape intermédiaire d'autodécharge ou de décharge à une densité de courant inférieure à 5 mA/g.

2. Procédé selon la revendication 1, **caractérisé en ce que** la concentration en lithium ionique au sein de l'électrolyte liquide avant le cycle de formation est supérieure ou égale à 2,0 mol/L.

3. Procédé selon la revendication 1 ou 2, **caractérisé en ce que** l'électrolyte liquide est choisi parmi les couples sel de lithium/solvant(s) suivants :
i) LiTFSI / mélange EC/DMC (1/1 ; v/v) ;
ii) LiFSI / mélange EC/DMC (1/1 ; v/v);
iii) LiBETI / mélange EC/DMC (1/1 ; v/v);
iv) LiTFSI / mélange EC/EB/DMC (1/1/3 ; v/v/v),
v) LiTFSI / mélange EC/MiPC/DMC (2/1/3/ ; v/v/v),
vi) LiTFSI / mélange EC/DME (1/2 ; v/v)

4. Procédé selon l'une quelconque des revendications précédentes, **caractérisé en ce que** l'électrolyte liquide renferme en outre du LiPF₆ à titre de sel de lithium additionnel.

5. Procédé selon la revendication 4, **caractérisé en ce que** le LiPF₆ est présent dans l'électrolyte en une quantité molaire représentant au maximum le quart de la quantité molaire de sels de lithium définis au point b) de la revendication 1.

6. Procédé selon l'une quelconque des revendications précédentes, **caractérisé en ce que** le matériau carboné poreux de l'électrode positive est choisi parmi le carbone dérivé de carbure (CDC), les nanotubes de carbone poreux, les noirs de carbones poreux, les fibres de carbone poreuses, les oignons de carbone et les carbones issus de coke.

7. Procédé selon l'une quelconque des revendications précédentes, **caractérisé en ce que** la surface spécifique du matériau carboné poreux de l'électrode positive varie de 1200 à 1800 m²/g environ.

8. Procédé selon l'une quelconque des revendications précédentes, **caractérisé en ce que** la densité du matériau carboné poreux de l'électrode positive varie de préférence de 0,5 à 0,8 g/cm³.

9. Procédé selon l'une quelconque des revendications précédentes, **caractérisé en ce que** le taux d'oxygène dans le matériau carboné poreux de l'électrode positive est inférieur à 2 % en masse.

10. Procédé selon l'une quelconque des revendications précédentes, **caractérisé en ce que** l'électrode positive a une épaisseur variant de 70 à 120 µm.

11. Procédé selon l'une quelconque des revendications précédentes, **caractérisé en ce que** le matériau carboné non poreux de l'électrode négative est choisi parmi le graphite, le carbone basse température, le noir de carbone, les nanotubes de carbone non poreux et les fibres de carbone non poreuses.

12. Procédé selon l'une quelconque des revendications précédentes, **caractérisé en ce que** la densité du matériau carboné non poreux de l'électrode négative varie de 1,0 à 1,9 g/cm³.

13. Procédé selon l'une quelconque des revendications précédentes, **caractérisé en ce que** la surface spécifique du matériau carboné non poreux de l'électrode négative est inférieure à 50 m²/g.

14. Procédé selon l'une quelconque des revendications précédentes, **caractérisé en ce que** l'électrode négative a une épaisseur variant de 40 à 70 µm.

15. Procédé selon l'une quelconque des revendications précédentes, **caractérisé en ce que** le rapport M_{E+}/M_{E-} est de préférence supérieure ou égale à 1.

16. Procédé selon la revendication 15, **caractérisé en ce que** le rapport M_{E+}/M_{E-} varie de 1 à 5 inclusivement.

17. Procédé selon l'une quelconque des revendications précédentes, **caractérisé en ce que** le matériau des électrodes positive et/ou négative comprend en outre au moins un liant et éventuellement au moins un agent conférant une conductivité électronique.

18. Procédé selon l'une quelconque des revendications précédentes, **caractérisé en ce qu'**il est mis en oeuvre à température ambiante ou à une température comprise entre 25°C et 70°C.

19. Procédé selon l'une quelconque des revendications précédentes, **caractérisé en ce que** la durée des étapes de relaxation entre chacune des étapes de charges successives de l'étape f) varie de 1 à 3 heures.

20. Procédé selon l'une quelconque des revendications précédentes, **caractérisé en ce que** les étapes de relaxation intermédiaires décrites dans l'étape f) sont des autodécharges.

21. Procédé selon la revendication précédente, **caractérisé en ce que** l'étape f) comprend les sous-étapes suivantes :
1) une sous-étape 1 de charge à une densité de courant comprise entre 10 et 400 mA/g jusqu'à une tension Uₘₐₓ₁ comprise entre 4,0 V et 5 V inclusivement, suivie d'une période de relaxation d'une durée d' 1 heure minimum. ;
2) une sous-étape 2 de charge à une densité de courant comprise entre 10 et 400 mA/g jusqu'à une tension Uₘₐₓ₂ > Uₘₐₓ₁ et ≤ 5 V, suivie d'une période de relaxation d'une durée d' 1 heure minimum ;
3) une sous-étape 3 de charge à une densité de courant comprise entre 10 et 400 mA/g jusqu'à une tension Uₘₐₓ₃ > Uₘₐₓ₂ et ≤ 5 V, suivie d'une période de relaxation d'une durée d' 1 heure minimum ;
4) une sous-étape 4 de charge à une densité de courant comprise entre 10 et 400 mA/g jusqu'à une tension Uₘₐₓ₄ > Uₘₐₓ₃ et ≤ 5 V, suivie d'une période de relaxation d'une durée d' 1 heure minimum ;
5) une sous-étape 5 de charge à une densité de courant comprise entre 10 et 400 mA/g jusqu'à une tension Uₘₐₓ₅ > Uₘₐₓ₄ et ≤ 5 V, suivie d'une période de relaxation d'une durée d'1 heure minimum.

## Patentansprüche

1. Verfahren zur Bildung eines Hybrid-Superkondensators, wobei das Verfahren mindestens einen Montageschritt einer negativen Elektrode auf der Basis mindestens eines nicht porösen kohlenstoffhaltigen Materials und einer positiven Elektrode auf der Basis mindestens eines porösen kohlenstoffhaltigen Materials umfasst, wobei die Elektroden voneinander mit Hilfe eines Separators getrennt sind, der mit einem flüssigen Elektrolyt imprägniert ist, umfassend mindestens ein Lithiumsalz, gelöst in mindestens einem Lösungsmittel, dann mindestens einen ersten Ladeschritt, wobei das Verfahren **dadurch gekennzeichnet ist, dass**:
a) die Konzentration an ionischem Lithium innerhalb des flüssigen Elektrolyten vor dem ersten Ladeschritt größer oder gleich 1,6 mol/L beträgt,
b) das Lithiumsalz des flüssigen Elektrolyten mindestens 50 Ma% eines Lithiumsalzes umfasst, ausgewählt aus dem Litiium-bis(trifluormethansulfonyl)imid (LiTFSI) und seinen Derivaten wie dem Lithium-bis(fluorsulfonyl)imid (LiFSI) und dem Lithium-bis(pentafluormethylsulfonyl)imid (LiBETI),
c) das Lösungsmittel des flüssigen Elektrolyten mindestens 80 Vol.-% eines Lösungsmittels umfasst, das aus den cyclischen Alkylcarbonaten ausgewählt ist, ausgewählt aus dem Ethylencarbonat (EC) und dem Propylencarbonat (PC), den acyclischen Alkylcarbonaten, ausgewählt aus dem Dimdthylcarbonat (DMC), dem Diethylcarbonat (DEC) und dem Methyl-isopropylcarbonat (MiPC), den Laktonen, den Estern, den Oxalanen und ihren Gemischen; wobei es sich versteht, dass das Lösungsmittel mindestens 20 Vol.-% Ethylencarbonat umfasst,
d) das poröse kohlenstoffhaltige Material der positiven Elektrode aus den Materialien ausgewählt ist, in welchen die durchschnittliche Größe der Poren über 0,7 nm beträgt und eine spezielle Fläche über zirka 700 m²/g beträgt,
e) das nicht poröse kohlenstoffhaltige Material der negativen Elektrode aus den Materialien ausgewählt ist, die imstande sind, die Lithiumionen zu integrieren und eine spezifische Fläche unter oder gleich 150 m²/g hat,
f) nach dem Montageschritt das Laden des Superkondensators in mehreren aufeinanderfolgenden Ladeschritten durchgeführt wird bis zu einer maximalen Spannung (Uₘₐₓ) zwischen 4 und 5 Volt inklusive und einer Stromdichte, die von 10 mA/g bis 400 mA/g schwankt, wobei jeder Ladeschritt vom folgenden Ladeschritt von einem Selbstentlade- oder Entladezwischenschritt mit einer Stromdichte unter 5 mA/g getrennt ist.

2. Verfahren nach Anspruch 1, **dadurch gekennzeichnet, dass** die Konzentration an ionischem Lithium innerhalb des flüssigen Elektrolyten vor dem Bildungszyklus über oder gleich 2,0 mol/L beträgt.

3. Verfahren nach Anspruch 1 oder 2, **dadurch gekennzeichnet, dass** der flüssige Elektrolyt aus den folgenden Paaren Lithiumsalz/Lösungsmittel ausgewählt ist:
i) LiTFSI / Gemisch EC/DMC (1/1; v/v),
ii) LiFSI / Gemisch EC/DMC (1/1; v/v),
iii) LiBETI / Gemisch EC/DMC (1/1; v/v),
iv) LiTFSI / Gemisch EC/EB/DMC (1/1/3; v/v/v),
v) LiTFSI / Gemisch EC/MiPC/DMC (2/1/3/; v/v/v),
vi) LiTFSI / Gemisch EC/DME (1/2; v/v).

4. Verfahren nach einem der vorangehenden Ansprüche, **dadurch gekennzeichnet, dass** der flüssige Elektrolyt ferner LiPF₆ als zusätzliches Lithiumsalz umfasst.

5. Verfahren nach Anspruch 4, **dadurch gekennzeichnet, dass** das LiPF₆ im Elektrolyt in einer molaren Menge vorhanden ist, die maximal das Viertel der molaren Menge von Lithiumsalzen, definiert in Punkt b) von Anspruch 1, darstellt.

6. Verfahren nach einem der vorangehenden Ansprüche, **dadurch gekennzeichnet, dass** das poröse kohlenstoffhaltige Material der positiven Elektrode aus dem Kohlenstoff als Derivat von Karbid (CDC), den porösen Kohlenstoff-Nanoröhrchen, dem porösen Karbonschwarz, den porösen Kohlenstofffasern, den Kohlenstoffzwiebeln und den Kokskohlenstoffen ausgewählt ist.

7. Verfahren nach einem der vorangehenden Ansprüche, **dadurch gekennzeichnet, dass** die spezifische Fläche des porösen kohlenstoffhaltigen Materials der positiven Elektrode von zirka 1200 bis 1800 m²/g schwankt.

8. Verfahren nach einem der vorangehenden Ansprüche, **dadurch gekennzeichnet, dass** die Dichte des porösen kohlenstoffhaltigen Materials der positiven Elektrode vorzugsweise von 0,5 bis 0,8 g/cm³ schwankt.

9. Verfahren nach einem der vorangehenden Ansprüche, **dadurch gekennzeichnet, dass** der Sauerstoffgehalt in dem porösen kohlenstoffhaltigen Material der positiven Elektrode unter 2 Ma% beträgt.

10. Verfahren nach einem der vorangehenden Ansprüche, **dadurch gekennzeichnet, dass** die positive Elektrode eine Stärke hat, die von 70 bis 120 µm schwankt.

11. Verfahren nach einem der vorangehenden Ansprüche, **dadurch gekennzeichnet, dass** das nicht poröse kohlenstoffhaltige Material der negativen Elektrode aus dem Graphit, dem Niedrigtemperaturkohlenstoff, dem Carbonschwarz, den nicht porösen Kohlenstoff-Nanoröhrchen und den nicht porösen Kohlenstofffasern ausgewählt ist.

12. Verfahren nach einem der vorangehenden Ansprüche, **dadurch gekennzeichnet, dass** die Dichte des nicht porösen kohlenstoffhaltigen Materials der negativen Elektrode von 1,0 bis 1,9 g/cm³ schwankt.

13. Verfahren nach einem der vorangehenden Ansprüche, **dadurch gekennzeichnet, dass** die spezifische Fläche des nicht porösen kohlenstoffhaltigen Materials der negativen Elektrode unter 50 m²/g beträgt.

14. Verfahren nach einem der vorangehenden Ansprüche, **dadurch gekennzeichnet, dass** die negative Elektrode eine Stärke hat, die von 40 bis 70 µm schwankt.

15. Verfahren nach einem der vorangehenden Ansprüche, **dadurch gekennzeichnet, dass** das Verhältnis M_{E+}/M_{E-} vorzugsweise über oder gleich 1 ist.

16. Verfahren nach Anspruch 15, **dadurch gekennzeichnet, dass** das Verhältnis M_{E+}/M_{E-} von 1 bis 5 inklusive schwankt.

17. Verfahren nach einem der vorangehenden Ansprüche, **dadurch gekennzeichnet, dass** das Material der positiven und/oder negativen Elektrode ferner mindestens ein Bindemittel und eventuell mindestens ein Mittel umfasst, das eine elektronische Konduktivität verleiht.

18. Verfahren nach einem der vorangehenden Ansprüche, **dadurch gekennzeichnet, dass** es bei Raumtemperatur oder bei einer Temperatur zwischen 25 °C und 70 °C inklusive umgesetzt wird.

19. Verfahren nach einem der vorangehenden Ansprüche, **dadurch gekennzeichnet, dass** die Dauer der Entspannungsschritte zwischen jeder der aufeinanderfolgenden Ladeschritte von Schritt f) von 1 bis 3 Stunden schwankt.

20. Verfahren nach einem der vorangehenden Ansprüche, **dadurch gekennzeichnet, dass** die in Schritt f) beschriebenen Entspannungs-Zwischenschritte Selbstentladungen sind.

21. Verfahren nach vorangehendem Anspruch, **dadurch gekennzeichnet, dass** der Schritt f) die folgenden Unterschritte umfasst:
1) einen Unterschritt 1 des Ladens bei einer Stromdichte zwischen 10 und 400 mA/g inklusive bis zu einer Spannung Uₘₐₓ₁ zwischen 4,0 V und 5 V inklusive, gefolgt von einer Entspannungsperiode einer Dauer von mindestens 1 Stunde,
2) einen Unterschritt 2 des Ladens bei einer Stromdichte zwischen 10 und 400 mA/g inklusive bis zu einer Spannung Uₘₐₓ₂ > Uₘₐₓ₁ und ≤ 5 V, gefolgt von einer Entspannungsperiode einer Dauer von mindestens 1 Stunde,
3) einen Unterschritt 3 des Ladens bei einer Stromdichte zwischen 10 und 400 mA/g inklusive bis zu einer Spannung Uₘₐₓ₃ > Uₘₐₓ₂ und ≤ 5 V, gefolgt von einer Entspannungsperiode einer Dauer von mindestens 1 Stunde,
4) einen Unterschritt 4 des Ladens bei einer Stromdichte zwischen 10 und 400 mA/g inklusive bis zu einer Spannung Uₘₐₓ₄ > Uₘₐₓ und ≤ 5 V, gefolgt von einer Entspannungsperiode einer Dauer von mindestens 1 Stunde,
5) einen Unterschritt 5 des Ladens bei einer Stromdichte zwischen 10 und 400 mA/g inklusive bis zu einer Spannung Uₘₐₓ₅ > Uₘₐₓ₄ und ≤ 5 V, gefolgt von einer Entspannungsperiode einer Dauer von mindestens 1 Stunde.

## Claims

1. A process for the preparation of a hybrid supercapacitor, said process comprising at least one stage of assembling a negative electrode based on at least one nonporous carbon-based material and a positive electrode based on at least one porous carbon-based material, said electrodes being separated from one another by means of a separator impregnated with a liquid electrolyte comprising at least one lithium salt in solution in at least one solvent, then at least one first stage of charging, said process being **characterized in that**:
a) the concentration of ionic lithium in the liquid electrolyte before the first charging stage is greater than or equal to 1.6 mol/1,
b) the lithium salt of the liquid electrolyte comprises at least 50% by weight of a lithium salt chosen from lithium bis(trifluoromethanesulfonyl)imide (LiTFSI) and its derivatives, such as lithium bis(fluorosulfonyl)imide (LiFSI) and lithium bis(pentafluoroethylsulfonyl)imide (LiBETI);
c) the solvent of the liquid electrolyte comprises at least 80% by volume of a solvent chosen from cyclic alkyl carbonates, chosen from ethylene carbonate (EC) and propylene carbonate (PC), acyclic alkyl carbonates, chosen from dimethyl carbonate (DMC), diethyl carbonate (DEC) and methyl isopropyl carbonate (MiPC), lactones, esters, oxalanes and their mixtures, it being understood that said solvent comprises at least 20% by volume of ethylene carbonate;
d) the porous carbon-based material of the positive electrode is chosen from materials in which the mean dimension of the pores is greater than 0.7 nm and which have a specific surface of greater than 700 m²/g approximately;
e) the nonporous carbon-based material of the negative electrode is chosen from materials which are capable of inserting the lithium ions and which have a specific surface of less than or equal to 150 m²/g;
f) after the assembling stage, the charging of said supercapacitor is carried out in several successive charging stages up to a maximum voltage (Uₘₐₓ) of between 4 and 5 volts and at a current density varying from 10 mA/g to 400 mA/g, each charging stage being separated from the following charging stage by an intermediate stage of self-discharging or discharging at a current density of less than 5 mA/g.

2. The process as claimed in claim 1, **characterized in that** the concentration of ionic lithium in the liquid electrolyte before the formation cycle is greater than or equal to 2.0 mol/1.

3. The process as claimed in claim 1 or 2, **characterized in that** the liquid electrolyte is chosen from the following lithium salt/solvent(s) pairs:
i) LiTFSI-EC/DMC (1/1; v/v) mixture;
ii) LiFSI-EC/DMC (1/1; v/v) mixture;
iii) LiBETI-EC/DMC (1/1; v/v) mixture;
iv) LiTFSI-EC/EB/DMC (1/1/3; v/v/v) mixture;
v) LiTFSI-EC/MiPC/DMC (2/1/3/; v/v/v) mixture;
vi) LiTFSI-EC/DME (1/2; v/v) mixture.

4. The process as claimed in any one of the preceding claims, **characterized in that** the liquid electrolyte additionally includes LiPF₆ as additional lithium salt.

5. The process as claimed in claim 4, **characterized in that** the LiPF₆ is present in the electrolyte in a molar amount representing at most a quarter of the molar amount of lithium salts defined in point b) of claim 1.

6. The process as claimed in any one of the preceding claims, **characterized in that** the porous carbon-based material of the positive electrode is chosen from carbide-derived carbon (CDC), porous carbon nanotubes, porous carbon blacks, porous carbon fibers, carbon onions and carbons resulting from coke.

7. The process as claimed in any one of the preceding claims, **characterized in that** the specific surface of the porous carbon-based material of the positive electrode varies from 1200 to 1800 m²/g approximately.

8. The process as claimed in any one of the preceding claims, **characterized in that** the density of the porous carbon-based material of the positive electrode preferably varies from 0.5 to 0.8 g/cm³.

9. The process as claimed in any one of the preceding claims, **characterized in that** the content of oxygen in the porous carbon-based material of the positive electrode is less than 2% by weight.

10. The process as claimed in any one of the preceding claims, **characterized in that** the positive electrode has a thickness varying from 70 to 120 µm.

11. The process as claimed in any one of the preceding claims, **characterized in that** the nonporous carbon-based material of the negative electrode is chosen from graphite, low-temperature carbon, carbon black, nonporous carbon nanotubes and nonporous carbon fibers.

12. The process as claimed in any one of the preceding claims, **characterized in that** the density of the nonporous carbon-based material of the negative electrode varies from 1.0 to 1.9 g/cm³.

13. The process as claimed in any one of the preceding claims, **characterized in that** the specific surface of the nonporous carbon-based material of the negative electrode is less than 50 m²/g.

14. The process as claimed in any one of the preceding claims, **characterized in that** the negative electrode has a thickness varying from 40 to 70 µm.

15. The process as claimed in any one of the preceding claims, **characterized in that** the ratio M_{E+}/M_{E-} is preferably greater than or equal to 1.

16. The process as claimed in claim 15, **characterized in that** the ratio M_{E+}/M_{E-} varies from 1 to 5 inclusive.

17. The process as claimed in any one of the preceding claims, **characterized in that** the material of the positive and/or negative electrodes additionally comprises at least one binder and optionally at least one agent conferring an electron conductivity.

18. The process as claimed in any one of the preceding claims, **characterized in that** it is carried out at ambient temperature or at a temperature of between 25°C and 70°C.

19. The process as claimed in any one of the preceding claims, **characterized in that** the duration of the relaxation stages between each of the successive charging stages of stage f) varies from 1 to 3 hours.

20. The process as claimed in any one of the preceding claims, **characterized in that** the intermediate relaxation stages described in stage f) are self-discharges.

21. The process as claimed in the preceding claim, **characterized in that** stage f) comprises the following substages:
1) a substage 1 of charging at a current density of between 10 and 400 mA/g up to a voltage Uₘₐₓ₁ of between 4.0 V and 5 V inclusive, followed by a relaxation period with a minimum duration of 1 hour;
2) a substage 2 of charging at a current density of between 10 and 400 mA/g up to a voltage Uₘₐₓ₂ > Uₘₐₓ₁ and ≤ 5 V, followed by a relaxation period with a minimum duration of 1 hour;
3) a substage 3 of charging at a current density of between 10 and 400 mA/g up to a voltage Uₘₐₓ₃ > Uₘₐₓ₂ and ≤ 5 V, followed by a relaxation period with a minimum duration of 1 hour;
4) a substage 4 of charging at a current density of between 10 and 400 mA/g up to a voltage Uₘₐₓ₄ > Uₘₐₓ₃ and ≤ 5 V, followed by a relaxation period with a minimum duration of 1 hour;
5) a substage 5 of charging at a current density of between 10 et 400 mA/g up to a voltage Uₘₐₓ₅ > Uₘₐₓ₄ and ≤ 5 V, followed by a relaxation period with a minimum duration of 1 hour.
